# FASCICULE DE BREVET EUROPEEN

(11) **EP 3 221 185 B1**
(45) Date de publication et mention de la délivrance du brevet: **22.06.2022**
(21) Numéro de dépôt: 15804171.5
(22) Date de dépôt: 18.11.2015
(51) Int. Cl.: F21S 41/147, F21S 41/26, F21S 41/29, F21S 41/33, F21S 41/39, F21S 45/47, B60Q 1/00

(54) **DISPOSITIF D'ÉCLAIRAGE POUR VÉHICULE ET VÉHICULE CORRESPONDANT**
LEUCHTEINHEIT FÜR EIN FAHRZEUG UND DAZUGEHÖRIGES FAHRZEUG
LIGHTING UNIT FOR A VEHICLE AND CORRESPONDING VEHICLE

(30) Priorité: 18.11.2014 FR 1461158
(43) Date de publication de la demande: 27.09.2017
(73) Titulaire: Renault s.a.s, 92100 Boulogne Billancourt (FR)
(72) Inventeur: GROSDIDIER, François, 91530 Sermaise (FR)
(74) Mandataire: Renault Group
(86) Numéro de dépôt international: PCT/FR2015/053113
(87) Numéro de publication internationale: WO 2016/079423

(56) Documents cités:
- EP-A1- 2 085 680
- EP-A2- 2 642 188
- DE-A1- 10 100 206
- DE-A1-102007 002 689
- DE-A1-102007 007 943
- DE-A1-102008 045 032
- DE-A1-102009 021 046
- DE-A1-102011 051 050
- FR-A1- 2 620 984
- US-A1- 2006 139 942
- US-A1- 2011 051 452
- US-A1- 2011 176 324
- US-A1- 2012 294 024

## Description

### 1. Domaine de l'invention

L'invention concerne le domaine de l'éclairage et de la signalisation des véhicules automobiles. Elle vise en particulier un dispositif d'éclairage additionnel destiné à émettre au moins un faisceau lumineux complémentaire aux dispositifs d'éclairage principaux du véhicule.

### 2. Art antérieur

Les dispositifs d'éclairage additionnels sont destinés de manière générale aux projecteurs ou phare venant compléter l'éclairage des dispositifs d'éclairage principaux prévus pour les feux de route, feu de position, feu de virage. Ils sont fixés sur la carrosserie du véhicule en général à l'avant de celui-ci. Un exemple de dispositif d'éclairage de ce genre comprend un boîtier dans lequel est monté une source lumineuse, un réflecteur associé ou non à une lentille.

Toutefois, ces dispositifs d'éclairage additionnels prévus pour tous les types de véhicule n'ont chacun qu'une seule fonction et ne peuvent émettre qu'un faisceau d'éclairage. Ce faisceau d'éclairage additionnel n'est pas suffisant pour adapter l'éclairage et/ou la signalisation du véhicule à la route et aux conditions de circulation pour le confort du conducteur et notamment sa sécurité. La multiplication de dispositifs d'éclairage additionnels sur un véhicule est très encombrante et implique un alourdissement du véhicule automobile. A cela s'ajoute, le fait que ces dispositifs d'éclairage additionnels ne sont pas adaptés non plus aux véhicules sportifs dont le dispositif d'éclairage principal doit permettre un éclairage optimal de la route car celui-ci est trop faible.

On connait la publication EP2085680 qui décrit un dispositif d'éclairage selon le préambule de la revendication 1.

### 3. Objectifs de l'invention

L'invention a notamment pour objectif de pallier tout ou partie des inconvénients de l'art antérieur.

Un objectif de l'invention est de fournir un dispositif d'éclairage permettant de combiner plusieurs fonctions d'éclairage dans un même dispositif d'éclairage tout en permettant une amélioration de la distribution lumineuse en fonction de la vitesse du véhicule.

Un autre objectif de l'invention est de proposer une solution qui soit simple et peu coûteuse.

### 4. Résumé de l'invention

Ces objectifs sont atteints grâce à un dispositif d'éclairage pour véhicule automobile selon les caractéristiques de la revendication 1.

Cette solution permet de résoudre les problèmes précités. Ce dispositif d'éclairage permet de fournir plusieurs fonctions d'éclairage et/ou de signalisation dans un unique dispositif d'éclairage additionnel telles que les fonctions de feux de position, feu antibrouillard, feux de route et de virage (connu sous le terme « corner in » en anglais). Ainsi, le dispositif soutient et complète la fonction d'éclairage de la route du dispositif d'éclairage principal dans tous les cas de figure. Cette solution permet également d'adapter l'éclairage en fonction de la vitesse du véhicule notamment lors de la fonction feu de route pour améliorer la visibilité puisqu'il y a une double fonction d'éclairage en feu de route. En particulier, cette solution facilite le montage et améliore la compacité du dispositif d'éclairage.

Selon d'autres caractéristiques dont les avantageuses ressortiront de la présente description :
- l'élément de support est réalisé en une seule pièce ;
- la lentille comprend au moins deux portions de lentille disposées chacune devant une des ouvertures de chaque cavité et en regard d'une portion de réflecteur ;
- chaque cavité, source lumineuse et portion de lentille sont agencés pour former un moyen réalisant une ligne de coupure du faisceau d'éclairage ;
- les cavités présentes des dimensions différentes des unes des autres ;
L'invention concerne également un véhicule qui est équipé d'au moins un dispositif d'éclairage selon l'une quelconque des caractéristiques susmentionnées.

### 5. Liste des figures

D'autres caractéristiques et avantages innovants ressortiront de la description ci-après, fournie à titre indicatif et nullement limitatif, en référence aux dessins annexés, dans lesquels :
- La figure 1 est une vue de face d'un dispositif d'éclairage installé à l'avant d'un véhicule automobile selon l'invention;
- La figure 2 est une vue en perspective et en éclaté des différentes parties composant le dispositif d'éclairage selon l'invention ;
- La figure 3 illustre en perspective et de face un exemple d'élément de support du dispositif d'éclairage selon l'invention ;
- La figure 4 illustre en perspective et en vue arrière un exemple d'élément de support du dispositif d'éclairage selon l'invention ;
- La figure 5 est une vue en perspective d'un exemple de réflecteur du dispositif selon l'invention ; et,
- Les figures 6a et 6b sont des vues en coupe transversale d'une cavité selon un mode de réalisation d'un dispositif d'éclairage selon l'invention.

### 6. Description détaillée

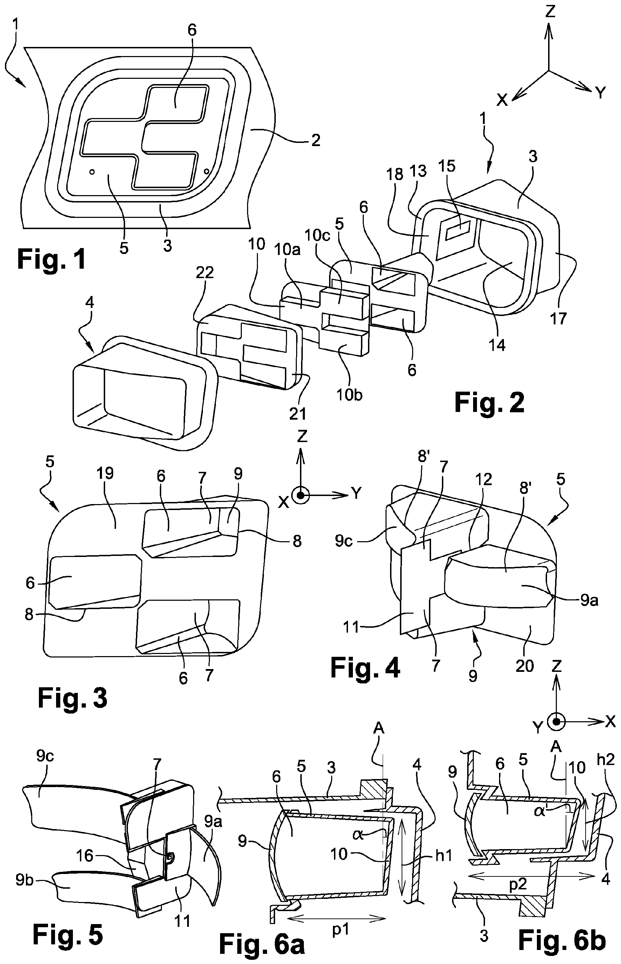

En référence à la figure 1, est représenté en vue de face un dispositif d'éclairage 1 et/ou de signalisation selon l'invention monté à l'avant de la carrosserie 2 d'un véhicule automobile.

Sur la figure 2, est illustré les différentes parties composant le dispositif d'éclairage ou phare additionnel 1 lequel comprend un boitier 3 formant un logement sensiblement parallélépipédique et qui est refermé par un couvercle 4 transparent sur une face avant 13 ouverte du boitier 3. Ce dernier comprend également une face arrière 14 opposée à la face avant 13 et deux faces latérales 17, 18 opposées.

Pour faciliter la compréhension de l'invention, nous considérons que le boitier 3 comprend une hauteur suivant un axe vertical Z. Est également représenté l'axe longitudinal horizontal X suivant lequel s'étend le boitier en profondeur et qui est perpendiculaire à l'axe vertical Z ainsi qu'à l'axe transversal Y de sorte que ces trois axes X, Y, Z forment un repère orthogonal direct tel qu'illustré sur les figures 1, 3 et 6b. Les termes « avant », « arrière », sont définis par rapport à l'axe horizontal X, les termes « inférieur », « supérieur » sont définis par rapport à l'axe Z et le terme « latéral » est défini par rapport à l'axe Y.

Sur la figure 2, la forme du boitier 3 est parallélépipédique, mais celle-ci peut être de forme prismatique et la section du boitier peut être quadrangulaire, de préférence rectangulaire ou circulaire ou elliptique de sorte à recevoir toutes les parties composant le dispositif d'éclairage. Le couvercle 4 transparent peut être réalisé en verre ou dans un matériau polymère tel qu'un thermoplastique. Dans le boitier 3 est monté au moins un élément de support 5, une source lumineuse 7, un réflecteur 9, une lentille 10 tels qu'illustré sur les figures 2, 3, 4, 5 et 6.

En référence à la figure 3, l'élément de support 5 est défini dans un plan YZ et comporte au moins deux cavités 6 distinctes dans chacune desquelles est montée une source lumineuse 7. Dans le présent mode de réalisation, l'élément de support 5 comprend trois cavités 6 distinctes. Toutefois, l'élément de support 5 pourrait comporter deux, quatre ou plus de cavités. Ces cavités 6 sont sensiblement définies dans le plan YY. Chaque cavité 6 traverse de part et d'autre l'élément de support 5 sensiblement suivant l'axe X de sorte à former une ouverture 8, 8' de part et d'autre de l'élément du support 5. En d'autres termes, une ouverture 8 est formée sur une surface avant 19 et sur une surface arrière 20 de l'élément de support 5. L'élément de support 5 est réalisé dans un matériau polymère tel qu'un thermoplastique. De préférence, l'élément de support 5 est réalisé en une seule pièce de sorte à faciliter son montage dans le boiter 3.

Selon une caractéristique de l'invention, au moins le réflecteur 9, les sources lumineuses 7 et les cavités sont configurés de sorte à générer au moins un faisceau d'éclairage à fonction route, position, virage ou antibrouillard.

Les sources lumineuses 7 telles qu'illustrées sur les figures 3 et 5 peuvent être constituées d'une lampe ou d'une LED (Light-Emitting Diode en anglais pour diode électroluminescente) et sont agencées pour émettre, au moyen d'un module d'alimentation électrique et de gestion 15 monté sur une des faces latérales 17, 18 du boitier 3, un faisceau lumineux destiné ici à créer un faisceau d'éclairage et/ou de signalisation de la route. Les sources lumineuses 7 sont au nombre de trois dans le présent mode de réalisation. Chaque source lumineuse 7 est agencée sur une carte électronique 11 que comprend le dispositif d'éclairage 1 et qui est monté sur l'élément de support 5. En particulier, les sources lumineuses 7 sont montées de part et d'autre de la carte électronique 11. Cette dernière 11 et les sources lumineuses 7 sont agencées de sorte qu'une source lumineuse 7 soit disposée dans une cavité 6. Pour cela et comme nous pouvons le voir sur les figures 3 et 4, l'élément de support 5 comprend, selon l'invention, une fente 12 destinée à recevoir la carte électronique 11 du côté de la surface arrière 20 de l'élément de support 5. La fente 12 est formée dans l'élément de support de sorte qu'une cavité 6 soit disposée de chaque côté de la fente 12. Dans une autre variante non représentée, la carte électronique comprenant les sources lumineuses est disposée entre la face arrière 14 du boitier 3 et l'élément de support 5. Cette configuration est notamment prévue pour un élément de support 5 comprenant deux cavités 6.

Le réflecteur 9 est destiné à réfléchir le faisceau lumineux émis par chaque source lumineuse 7. Le réflecteur 9 est disposé dans le boitier 3 de préférence entre la face arrière 14 et l'élément de support 5. Le réflecteur 9 comprend au moins deux portions de réflecteurs disposées chacune à l'endroit des ouvertures 8' des cavités orientées vers la face arrière 14 du boitier 3. Selon le mode de réalisation illustré sur les figures 4 et 5, le réflecteur comprend trois portions de réflecteurs 9a, 9b, 9c qui sont fixées sur la carte électronique 11. De la sorte, lorsque la carte électronique est insérée dans la fente 12, chaque portion de réflecteur 9a, 9b, 9c recouvre une des ouvertures d'une cavité 6. Dans une autre variante, chaque portion de réflecteur est fixée sur l'élément de support 5 pour fermer chaque ouverture 8'.

La lentille 10 illustrée en particulier sur les figures 2 et 6a, 6b est destinée à réfracter le faisceau lumineux de chaque source lumineuse 7 de sorte à former le faisceau d'éclairage et/ou de signalisation. La lentille 10 est disposée dans le boitier 3 de préférence entre la face avant 13 et l'élément de support 5. La lentille 10 comprend au moins deux portions de lentille disposées chacune devant une des ouvertures 8 de chaque cavité 6 et en regard d'une portion de réflecteur 9a, 9b, 9c. Dans le présent mode de réalisation, la lentille 10 comprend trois portions de lentilles 10a, 10b, 10c qui sont chacune disposée à l'endroit de l'ouverture 8 et en regard d'une portion de réflecteur 9a, 9b, 9c de sorte à fermer la cavité 6.

Comme décrit précédemment, chaque cavité 6, source lumineuse, réflecteur et lentille coopèrent pour émettre un faisceau de type route, position, virage ou anti-brouillard en complément d'un faisceau d'éclairage d'un dispositif d'éclairage principal. En d'autres termes, chaque cavité permet d'émettre un faisceau d'éclairage d'une distribution lumineuse différente des autres. A cet effet, comme nous pouvons le voir en coupe sur les figures 6a, 6b, les cavités 6 présentent des dimensions différentes des unes des autres. La cavité 6 située en partie supérieure de l'élément de support 5 est de plus grande dimension que les deux autres cavités 6 tandis que la cavité 6 située en partie inférieure de l'élément de support 5 est de plus petite dimension. Par exemple, la hauteur h₁ et la profondeur p₁ de la cavité 6 supérieure illustrée sur la figure 6a sont supérieures à celles (h₂, p₂) de la cavité 6 inférieure illustrée sur la figure 6b. Bien entendu, l'agencement des cavités de plus grande ou de plus petites dimensions dans l'élément de support 5 peut être différent. Chaque portion de réflecteur 9a, 9b, 9c et de lentille 10a, 10b, 10c présentent ainsi une dimension en fonction de celle de la cavité 6 à laquelle elle est associée. Par ailleurs, chaque portion de réflecteur est orientée vers la source lumineuse 7 d'une cavité 6 pour émettre un faisceau lumineux vers la lentille 10 correspondante. Les portions de réflecteurs peuvent par exemple être des réflecteurs elliptiques associés à une lentille convergente. Chaque lentille est également positionnée sensiblement dans un plan d'angle α, α' par rapport à une droite A parallèle à l'axe Z en référence aux figures 6a, 6b. Les angles α, α' formés par les lentilles sont différents des uns des autres de sorte à former le faisceau d'éclairage correspondant à un feu de route, position, virage ou anti-brouillard. Au moins deux faisceaux d'éclairage peuvent être combinés pour former un faisceau d'éclairage de type route.

Enfin, l'agencement des lentilles 10, cavités 6, sources lumineuses 7 et réflecteurs permettent de former un moyen réalisant une ligne de coupure du faisceau d'éclairage. En effet, pour obtenir un faisceau d'éclairage réglementaire de route, de position, de virage ou anti-brouillard, il est connu d'occulter une partie du faisceau d'éclairage ce qui détermine une coupure dans le faisceau d'éclairage de sorte à ne pas éblouir les conducteurs de véhicule circulant en sens inverse. Dans un autre mode de réalisation du dispositif 1 d'éclairage non représenté, celui-ci comprend un couvercle agencé pour fermer le boitier et pourvu d'un nombre de lumières correspondant au nombre de cavités, chaque lumière étant destinée à coopérer avec une cavité. L'agencement des lumières dans le couvercle permet de créer le moyen réalisant une ligne de coupure dans le faisceau d'éclairage. Les lumières sont destinées à recevoir des panneaux transparents.

Le dispositif 1 d'éclairage comprend, selon l'invention, encore un module de refroidissement 16 destiné à refroidir les sources lumineuses 7 fixées sur la carte électronique 11. Pour faciliter le montage et pour améliorer la compacité du dispositif d'éclairage 1, le module de refroidissement 16 est également monté sur une des faces de la carte électronique 11.

Afin de cacher les irrégularités et les différentes parties composant le dispositif 1 d'éclairage, un masque 21 pourvu de découpes 22 est disposé entre l'élément de support 5 et le couvercle transparent 4.

Le dispositif 1 d'éclairage peut comprendre dans une variante encore des moyens d'acquisition de données relatives au fonctionnement du véhicule automobile. Ces moyens d'acquisition renseignent sur les paramètres de vitesse, de position, etc du véhicule pour permettre de commander les tensions d'alimentation des sources lumineuses situées dans chaque cavité. De la sorte, les sources lumineuses remplissant la fonction de feu de route s'activent lorsqu'une vitesse prédéterminée du véhicule est atteinte.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention, qui est défini par les revendications annexées.

## Revendications

1. Dispositif (1) d'éclairage pour véhicule automobile, le dispositif (1) comprenant :
- un boîtier (3) dans lequel est monté un élément de support (5) qui comporte au moins deux cavités (6) et dans chacune desquelles est monté une source lumineuse (7) ;
- un réflecteur (9) comprenant au moins deux portions de réflecteur (9a, 9b, 9c) destiné à réfléchir un faisceau lumineux émis par au moins une des sources lumineuses (7) ; et,
- une lentille (10) destinée à réfracter le faisceau lumineux en un faisceau d'éclairage,
le réflecteur (9) et la lentille (10) étant agencés de part et d'autre de l'élément de support (5), et au moins le réflecteur (9), les sources lumineuses (7) et les cavités (6) étant configurés de sorte à générer au moins un faisceau d'éclairage à fonction route, position, virage ou anti-brouillard,
ledit dispositif (1) d'éclairage comprenant une carte électronique (11) sur laquelle sont agencées les sources lumineuses (7) et les portions de réflecteur (9, 9a, 9b, 9c), chaque cavité (6) est traversante et comprend une ouverture (8 ; 8') de part et d'autre de l'élément de support (5), et les portions du réflecteur (9, 9a, 9b, 9c) sont disposées chacune à l'endroit d'une des ouvertures (8 ; 8') de chaque cavité (6), **caractérisé en ce que** le dispositif comprend en outre un module de refroidissement (16) des sources lumineuses (7) lequel est relié à la carte électronique (11, et **en ce que** l'élément de support (5) comprend une fente (12) agencée pour recevoir la carte électronique (11) et le module de refroidissement (16) .

2. Dispositif (1) selon la revendication 1, **caractérisé en ce que** l'élément de support (5) est réalisé en une seule pièce.

3. Dispositif (1) selon la revendication 1 ou 2, **caractérisé en ce que** la lentille (10) comprend au moins deux portions de lentille (10a, 10b, 10c) disposées chacune devant une des ouvertures (8 ; 8') de chaque cavité (6) et en regard d'une portion de réflecteur (9a, 9b, 9c).

4. Dispositif (1) selon l'une quelconque des revendications précédentes, **caractérisé en ce que** chaque cavité (6), source lumineuse (7) et portion de lentille (10a, 10b, 10c) sont agencés pour former un moyen réalisant une ligne de coupure du faisceau d'éclairage.

5. Dispositif (1) selon l'une quelconque des revendications précédentes, **caractérisé en ce que** les cavités (6) présentent des dimensions différentes des unes des autres.

6. Véhicule **caractérisé en ce qu'**il est équipé d'au moins un dispositif d'éclairage (1) selon l'une quelconque des revendications précédentes.

## Patentansprüche

1. Beleuchtungsvorrichtung (1) für ein Kraftfahrzeug, die Vorrichtung (1) umfassend:
- ein Gehäuse (3), in dem ein Tragelement (5) angebracht ist, das wenigstens zwei Hohlräume (6) aufweist und in denen jeweils eine Lichtquelle (7) angebracht ist;
- einen Reflektor (9), der wenigstens zwei Reflektorabschnitte (9a, 9b, 9c) umfasst, der dazu bestimmt ist, ein Lichtbündel zu reflektieren, das von wenigstens einer der Lichtquellen (7) emittiert wird; und,
- eine Linse (10) zum Brechen des Lichtbündels zu einem Beleuchtungsbündel,
wobei der Reflektor (9) und die Linse (10) beiderseits des Tragelements (5) angeordnet sind und wenigstens der Reflektor (9), die Lichtquellen (7) und die Hohlräume (6) so ausgebildet sind, dass sie wenigstens ein Beleuchtungsbündel mit Fernlicht-, Standlicht-, Kurvenlicht- oder Nebelleuchtenfunktion erzeugen,
wobei die Beleuchtungsvorrichtung (1) eine Leiterplatte (11) umfasst, auf der die Lichtquellen (7) und die Reflektorabschnitte (9, 9a, 9b, 9c) angeordnet sind, jeder Hohlraum (6) durchlässig ist und eine Öffnung (8; 8') beiderseits des Tragelements (5) umfasst und die Abschnitte des Reflektors (9, 9a, 9b, 9c) jeweils an der Stelle einer der Öffnungen (8; 8') jedes Hohlraums (6) angeordnet sind, **dadurch gekennzeichnet, dass** die Vorrichtung ferner ein Kühlmodul (16) der Lichtquellen (7) umfasst, das mit der Leiterplatte (11) verbunden ist, und dadurch, dass das Tragelement (5) einen Schlitz (12) umfasst, der dafür angeordnet ist, die Leiterplatte (11) und das Kühlmodul (16) aufzunehmen.

2. Vorrichtung (1) nach Anspruch 1, **dadurch gekennzeichnet, dass** das Tragelement (5) einstückig ausgebildet ist.

3. Vorrichtung (1) nach Anspruch 1 oder 2, **dadurch gekennzeichnet, dass** die Linse (10) wenigstens zwei Linsenabschnitte (10a, 10b, 10c) umfasst, die jeweils vor einer der Öffnungen (8; 8') jedes Hohlraums (6) und gegenüber einem Reflektorabschnitt (9a, 9b, 9c) angeordnet sind.

4. Vorrichtung (1) nach einem der vorhergehenden Ansprüche, **dadurch gekennzeichnet, dass** jede(r) Hohlraum (6), Lichtquelle (7) und Linsenabschnitt (10a, 10b, 10c) dafür angeordnet sind, ein Mittel zu bilden, das eine Schnittlinie des Lichtbündels ausbildet.

5. Vorrichtung (1) nach einem der vorhergehenden Ansprüche, **dadurch gekennzeichnet, dass** die Hohlräume (6) Abmessungen aufweisen, die sich voneinander unterscheiden.

6. Fahrzeug, **dadurch gekennzeichnet, dass** es mit wenigstens einer Beleuchtungsvorrichtung (1) nach einem der vorhergehenden Ansprüche ausgerüstet ist.

## Claims

1. Lighting device (1) for a motor vehicle, the device (1) comprising:
- a housing (3) containing a support element (5) that has at least two cavities (6), each of which contains a light source (7);
- a reflector (9) comprising at least two reflector portions (9a, 9b, 9c) that is intended to reflect a light beam emitted by at least one of the light sources (7); and
- a lens (10) intended to refract the light beam into an illumination beam,
the reflector (9) and the lens (10) being arranged on either side of the support element (5), and at least the reflector (9), the light sources (7) and the cavities (6) being configured so as to generate at least one illumination beam with a high-beam, position, cornering or fog light function,
said lighting device (1) comprising an electronic circuit board (11) on which the light sources (7) and the reflector portions (9, 9a, 9b, 9c) are arranged, each cavity (6) is a through-cavity and comprises an opening (8; 8') on either side of the support element (5), and the reflector portions (9, 9a, 9b, 9c) are each arranged at the site of one of the openings (8; 8') of each cavity (6), **characterized in that** the device also comprises a cooling module (16) for the light sources (7) which is connected to the electronic circuit board (11), and **in that** the support element (5) comprises a slot (12) arranged to receive the electronic circuit board (11) and the cooling module (16).

2. Device (1) according to Claim 1, **characterized in that** the support element (5) is produced as a single piece.

3. Device (1) according to Claim 1 or 2, **characterized in that** the lens (10) comprises at least two lens portions (10a, 10b, 10c), each arranged in front of one of the openings (8; 8') of each cavity (6) and facing a reflector portion (9a, 9b, 9c).

4. Device (1) according to any one of the preceding claims, **characterized in that** each cavity (6), light source (7) and lens portion (10a, 10b, 10c) are arranged to form a means producing a cut-off line for the illumination beam.

5. Device (1) according to any one of the preceding claims, **characterized in that** the cavities (6) have different dimensions from each other.

6. Vehicle, **characterized in that** it is equipped with at least one lighting device (1) according to any one of the preceding claims.
